# EUROPÄISCHE PATENTANMELDUNG

(11) **EP 3 708 926 A1**
(43) Veröffentlichungstag der Anmeldung: **16.09.2020**
(21) Anmeldenummer: 20163069.6
(22) Anmeldetag: 13.03.2020
(51) Int. Cl.: F25B 17/08, F25B 37/00, F28D 1/04, F28D 7/00, F28D 17/02, F28D 17/04

(54) **ADSORPTIVER WÄRME- UND STOFFÜBERTRAGER**

(30) Priorität: 14.03.2019 DE 102019001810
(71) Anmelder: Steinbeis Transferzentren GmbH an der Hochschule Karlsruhe (STHK GmbH), 76133 Karlsruhe (DE)
(72) Erfinder: BURK, Roland, 70469 Stuttgart (DE)
(74) Vertreter: Spachmann, Holger

(57) **Zusammenfassung**

Die Erfindung betrifft einen adsorptiven Wärme- und Stoffübertrager als vorgefertigte Baugruppe zur Verwendung in einem Sorptionsmodul und/oder für eine Adsorptions-Wärmepumpe oder -Kälteanlage. Der Vorschlag kombiniert die Vorteile einer hohen Leistungsdichte, geringer Materialkosten und einer einfachen Herstellbarkeit mit hohem Automatisierungspotenzial bei größeren Stückzahlen. Es wird vorgeschlagen, dass dessen Gesamtstruktur zur Ausbildung einer fluidseitigen Wärmeübertragungsstruktur aus mindestens zwei Reihen innen berippter flacher Fluidführungskanäle besteht, zwischen denen mindestens ein vorgefertigter Block alternierend mit Wärmeleitrippen verklebter optimiert ausgeformter Adsorbens-Formkörpern angeordnet und mit den Fluidführungsstrukturen mit gutem Wärmekontakt verbunden ist. Der vorgeschlagene adsorptive Wärme- und Stoffübertrager ist hinsichtlich Werkstoffauswahl und Fertigungskonzept so ausgeführt, dass er sich mit nur zwei einfach dicht zu fügenden Schnittstellen zum Beispiel mit einem induktiven Lötverfahren mit einer ebenfalls vorgefertigten funktionalisierten Gehäusebaugruppe mit integrierter Phasenwechselstruktur für ein Arbeitsmittel zu einem fertigen Sorptionsmodul verbinden lässt.

## Beschreibung

Die Erfindung betrifft einen adsorptiven Wärme- und Stoffübertrager als vorgefertigte Baugruppe zur Verwendung in einem Sorptionsmodul und/oder für eine Adsorptions-Wärmepumpe oder -Kälteanlage. Der Vorschlag kombiniert die Vorteile einer hohen Leistungsdichte, geringer Materialkosten und einer einfachen Herstellbarkeit mit hohem Automatisierungspotenzial bei größeren Stückzahlen. Es wird vorgeschlagen, dass dessen Gesamtstruktur zur Ausbildung einer fluidseitigen Wärmeübertragungsstruktur aus mindestens zwei Reihen innen berippter flacher Fluidführungskanäle besteht, zwischen denen mindestens ein vorgefertigter Block alternierend mit Wärmeleitrippen verklebter optimiert ausgeformter Adsorbens-Formkörpern angeordnet und mit den Fluidführungsstrukturen mit gutem Wärmekontakt verbunden ist. Der vorgeschlagene adsorptive Wärme- und Stoffübertrager ist hinsichtlich Werkstoffauswahl und Fertigungskonzept so ausgeführt, dass er sich mit nur zwei einfach dicht zu fügenden Schnittstellen zum Beispiel mit einem induktiven Lötverfahren mit einer ebenfalls vorgefertigten funktionalisierten Gehäusebaugruppe mit integrierter Phasenwechselstruktur für ein Arbeitsmittel zu einem fertigen Sorptionsmodul verbinden lässt.

### STAND DER TECHNIK

Die allgemeine Ressourcen- und Weltklimaproblematik erfordert u. a. einen effizienteren Umgang mit chemischen, insbesondere fossilen Energieträgern. Da ein Großteil dieser festen, flüssigen und gasförmigen Energieträger heute noch für die thermische Gebäudekonditionierung, also für Heiz- und Klimatisierungszwecke verbraucht wird, besteht dort der größte Handlungsbedarf.

Die Effizienz von Heizsystemen wurde bereits durch den Übergang von Heizwertkesseln zu Brennwertkesseln verbessert. Eine weitere Effizienzsteigerung versprechen Wärmetransformationseinrichtungen, insbesondere Wärmepumpen, die alternativ oder zusätzlich einen Exergieanteil des eingesetzten Energieträgers nutzen. Damit lassen sich sonst nicht direkt nutzbare niederwertige aber erneuerbare Wärmequellen, wie insbesondere Umwelt- oder Solarwärme für Heizzwecke aufwerten und dadurch nutzbar machen.

Neben der indirekten Exergienutzung über den von Kraftwerken erzeugten Strom, der zum Antrieb von Elektrowärmepumpen benötigt wird, wird auch die direkte, dezentrale Exergienutzung durch thermisch angetriebene Wärmepumpen immer interessanter, da sie eine noch höhere Energieeffizienz erreichen. Zudem tragen diese Systeme dazu bei, die elektrischen Stromnetze an sonnen- und windarmen Wintertagen zu entlasten. Durch den notwendigen Brenner enthalten diese thermisch angetriebenen Systeme bereits ein erprobtes Backup-System für sehr kalte Außentemperaturen, so dass diese Systeme auch an extrem kalten Wintertagen nie schlechter sein können, als ein Brennwertsystem. Daher sind die thermisch angetriebenen Wärmetransformationseinrichtungen besonders in Bestandsgebäuden gegenüber elektrisch angetriebenen Wärmepumpen klar im Vorteil und könnte dadurch einen großen Beitrag zur sogenannten "Wärmewende" liefern.

Da thermisch angetriebene Wärmepumpen den Exergieinhalt eines Wärmestroms von einer auf höherem Temperaturniveau liegenden Wärmequelle zu einer auf niedrigerem Temperaturniveau liegenden Wärmesenke nutzen, können sie bei Bedarf auch für Kühlungszwecke und zur Aufwertung von nutzloser Niedertemperaturwärme verwendet werden, indem Wärme ohne den hohen Strombedarf für den Betrieb eines Kompressors einem dritten Wärmereservoir entzogen und auf einem höheren Temperaturniveau wieder abgegeben wird. Man spricht hier allgemein von Wärmetransformation. Bei Sorptionswärmepumpen unterscheidet man zwischen Absorptionswärmepumpen, die mit einem flüssigen Lösungsmittel arbeiten und Adsorptionswärmepumpen, die mit einem festen Adsorbens arbeiten. Das Arbeitsprinzip von Absorptionswärmepumpen ist z. B. beschrieben unter https://www.erdgas.info/neueheizung/heizungstechnik/gaswaermepumpe/funktionsprinzip-absorption/

Neuerdings kommen jedoch die diskontinuierlich arbeitende Adsorptionswärmepumpen stärker in den Fokus, da sie ganz ohne bewegte Verschleißteile wie zum Beispiel eine Lösungspumpe auskommen. Sie sind an vielerlei Stellen beschrieben, beispielsweise in der CH 690197A.

Derartige klassische Adsorptionswärmepumpen basieren meist auf einer Mehrzahl sogenannter Sorptionsreaktoren, die zeitlich versetzt zwischen einem hohen und einem niedrigeren Temperaturniveau als sogenannter thermischer Verdichter eines Arbeitsmittels thermisch zykliert werden.

Es wurde erkannt, dass die Leistungsdichte derartiger Sorptionsreaktoren durch die kinetischen Eigenschaften der enthaltenen Adsorberstruktur limitiert wird. Mit dieser Erkenntnis wurden verschiedene Vorschläge gemacht, wie die Kinetik derartiger Strukturen verbessert werden kann.

Ein Vorschlag ist in WO 2010/112433 A2 offenbart. Dort wird ein Arbeitsmittelspeicher vorgeschlagen, bei dem ein Adsorptionsmittel auf einer Mehrzahl von Schichten aus Metallblech appliziert wird, die mit einer weiteren Struktur thermisch leitend verbunden sind. Diese weitere Struktur könnten auch fluidführende Rohe, insbesondere auch Flachrohre sein.

Es wird vorgeschlagen, die einzelnen Bleche mit Schlitzen zu versehen, durch die später Messing-Flachrohre hindurch geschoben und verlötet werden könnten, um einen bereits bekannten Flachrohr-/Rippenblock zu formen. Die Schrift fokussiert im Wesentlichen auf einige Ideen, wie das bei Rohr-/Adsorberrippen-Konzepten entstehende Problem eines thermisch leitenden und thermomechanisch stabilen Verbundes zwischen Metallblech und Adsorbensstruktur so prozesssicher dargestellt werden kann, dass es bei den angegebenen hohen Löttemperaturen von über 300°C unter Vakuum oder Schutzgasatmosphäre zu keinen Abplatzungen kommt. Die vorgeschlagenen Maßnahmen zur Lösung dieses Problems sind jedoch alle sehr aufwändig und kaum kostengünstig und prozesssicher umsetzbar.

In dieser Schrift ist bis auf den Hinweis auf Messing-Flachrohre, die mit den Blechschichten hart verlötet sind, auch nicht offenbart, wie die weitere Struktur im Detail aussehen soll, damit die Sorptionswärmen mittels eines Wärmeübertragungs-Fluids zu- und abgeführt werden können. Auch wird keine Lösung angegeben, wie die Flachrohre durch die erforderlichen Rohrböden fluiddicht hindurchgeführt und abgedichtet werden sollen. Die zur Fluidseite gehörige weitere Struktur gehört daher nicht zum offenbarten Lösungskonzept.

Unabhängig von der fraglichen technischen Umsetzbarkeit werden keine Vorschläge gemacht, wie die die Leistungsdichte limitierende Adsorptionskinetik als kombinierter Wärme- und Stoffübergangsprozess optimiert werden kann.

Weiterhin weisen die offenbarten Ausführungsformen mit ihren Freiräumen um jeden Adsorptions-Formkörper herum einen nur geringen Bauraumnutzungsgrad auf, was ebenfalls zur Begrenzung der Leistungsdichte beiträgt. Ein weiterer Nachteil besteht darin, dass das Werkstoff-, Fertigungs- und Fügekonzept noch nicht aufeinander abgestimmt und durch das form- und stoffschlüssige Rippe-/Rohr-Konzept technisch kaum umsetzbar ist.

Ein anderer Vorschlag ist in der DE 10 2011 079 581 A1 beschrieben. Dort werden Adsorptions-Formkörper ohne Einsatz von Kupfer-basierten Materialien direkt an fluiddurchströmte Edelstahl-Flachrohre z. B. durch Kleben bevorzug mit einem elastischen Silikonkleber stoffschlüssig appliziert. Dadurch muss die Gesamtstruktur keinen hohen Löttemperaturen für eine stoffschlüssige Rippe/Rohr-Verbindung ausgesetzt werden und kann den thermomechanischen Belastungen während des Betriebes unterhalb der Zersetzungstemperatur des Klebers problemlos standhalten. Die Edelstahl-Flachrohre sind dabei durch Edelstahl-Rohrböden geführt und mit diesen durch Laserschweißen bei nur lokaler und kurzzeitiger Wärmeeinwirkung stoffschlüssig und fluiddicht verbunden. Da auch die übrigen Gehäuseteile aus Edelstahl ausgeführt sind, besteht ein einheitliches und technisch erprobtes Werkstoffkonzept.

Diese Bauweise besitzt allerdings den Nachteil, dass zur Erreichung einer guten Adsorptionskinetik (Wärmeleitung der Adsorptions-Formkörper und Stofftransport des Arbeitsmittels in der Adsorberstruktur) sowohl relativ dünne Adsorbensschichten als auch eine große Kontaktfläche zwischen der Rohr- und der Adsorberstruktur und damit eine Vielzahl relativ dünner Flachrohre benötigt werden, was einerseits die Kosten und den Fertigungsaufwand nach oben treibt und andererseits das Verhältnis von Aktivmasse zu Passivmasse (Adsorbensmasse zu Metallmasse) verringert, wodurch der thermische COP (Verhältnis von gepumpter Wärme zu Antriebswärme) verschlechtert wird. Durch fehlende innere Zuganker der Flachrohre ist auch deren Formstabilität bei Einsatz höherer Fluid-Drücke begrenzt.

Vorteile der erfindungsgemäßen Lösung bestehen darin, einen kompletten adsorptiven Wärme- und Stoffübertrager inklusiver der erforderlichen Fluidführungs-, Wärme- und Stoffübertragungs- sowie Gehäusestrukturen vorzuschlagen, der die Vorteile einer hohen Wärmeübertragungs- und Sorptionskinetik zur Erreichung einer attraktiven Leistungsdichte bei hohem COP durch Einsatz eines bisher nicht in Erwägung gezogenen abgestimmten Werkstoff-, Fertigungs- und Fügekonzeptes wesentlich kostengünstiger kombiniert. Weitere Aufgabe ist es, ein Baugruppen-orientiertes Konzept vorzuschlagen, das mit einer funktionalisierten Gehäusebaugruppe mit integrierter Phasenwechselstruktur zur Ausbildung eines fertigen Sorptionsmoduls zur Verwendung in adsorptiven Wärmepumpen und/oder Kälteanlagen verbunden werden kann.

Diese Aufgabe wird durch einen adsorptiven Wärme- und Stoffübertrager nach dem unabhängigen Anspruch 1 gelöst. Vorteilhafte Ausbildungen der Erfindung sind Gegenstand der Unteransprüche.

### OFFENBARUNG DER ERFINDUNG

Es wird ein adsorptiver Wärme- und Stoffübertrager vorgeschlagen. dessen thermoaktive Struktur aus mindestens einem, insbesondere einer Mehrzahl von vorgefertigten Composit-Adsorberblöcken mit alternierend mit Wärmeleitblechen verklebten, aber ggf. auch verlöteten, verschweißten oder sonst wie verbundenen Adsorbens-Formkörper, besteht, die in ein vorgefertigtes und fluiddicht gefügtes Fluidführungssystem aus Fluidführungskanäle und Rohrböden, bevorzugt ohne Formschluss, eingebracht und mit gutem Wärmekontakt, bevorzugt mittels Löten verbunden sind. Statt einem Löten kann beispielsweise auch ein thermoplastischer Kleber einsetzt werden.

Bei Verzicht auf einen Formschluss wird ein erleichtertes nachträgliches Einbringen der Composit-Adsorberblöcke in ein vorgefertigtes Fluidführungssystem ermöglicht und bei einer späteren Außerbetriebnahme ein einfacheres sortenreines Recycling der verschiedenen verbauten Materialen ermöglicht. Denn die Composit-Adsorberblöcke können zur Entsorgung und Rohstoff-Rückgewinnung ohne Formschluss leicht wieder aus dem Fluidführungssystem entfernt werden, z. B. durch Aufschmelzen des Lotes oder thermische Aufweichung eines thermoplastischen Klebers.

In einer bevorzugten Ausführungsform kann das Fluidführungssystem aus mindestens zwei parallel ausgerichteten Fluidführungskanälen bestehen, die jeweils mit mindestens einem oberflächenvergrößernden inneren Rippenpaket ausgestattet sind. Um einen bevorzugt zylindrischen Querschnitt eines Bündels parallel durchströmbarer Fluidführungskanäle optimal auszufüllen, wird vorgeschlagen, unterschiedlich breite Fluidführungskanäle einzusetzen. Besonders einfach ist eine Ausführungsform bestehend aus zwei Z-Blechen erreichbar, bei denen die langen Fahnen der Z-Bleche unterschiedlich breit beschnitten werden.

In einer bevorzugten Ausführungsform können die Fluidführungskanäle aus zinnbeschichtetem Stahlblech, insbesondere Weißblech, gefertigt sein und endseitig in je einen ebenfalls aus Weißblech gefertigten Rohrboden münden und mit diesem fluiddicht verlötet sein. Vorteilhaft kann der Übergang von bisher bevorzugten Messing- oder Edelstahl- Werkstoffen für die Fluidführungs- und Gehäusekomponenten zu dem in der Metallverpackungsindustrie eingesetzten Weißblech (verzinntes Stahlblech) ausgeformt sein. Denn Weißblech kombiniert die Vorteile niedriger Materialkosten mit einer einfachen Umformbarkeit sowie Fügbarkeit durch Laserschweißen, Hochfrequenzschweißen oder Löten mit Zinnbasis-Loten bei vergleichsweise niedrigen Löttemperaturen. Auch bietet die Zinnbeschichtung einen Grundschutz gegen Korrosion, der durch weitere preiswerte Beschichtungen noch verbessert werden kann. Weiterhin ist Zinn und Stahl mit bevorzugt eingesetzten alkoholischen Arbeitsmitteln, insbesondere mit dem besonders bevorzugten Methanol chemisch kompatibel.

Durch den einheitlichen Zinn-beschichteten Werkstoff für die Fluidführungskanäle und alle den Arbeitsmittelraum umschließenden Gehäusekomponenten werden Dichtheitsprobleme an dicht zu fügenden Schnittstellen bei der Fertigung von Sorptionsmodulen komplett vermieden und es können Fertigungs-, Umform- und Fügeverfahren aus der Metallverpackungsindustrie inklusive besonders bevorzugter Weichlötverfahren eingesetzt werden. Die erforderliche Festigkeit kann dabei durch zusätzliche Formschluss-Maßnahmen auf das erforderliche Niveau gebracht werden.

Ein weiteres kennzeichnendes Merkmal der vorgeschlagenen Lösung ist die Vorfertigungsmöglichkeit eines komplett mit den Rohrböden vorkassettierten Fluidführungsblockes zunächst ohne Adsorberstrukturen. Dadurch können bewährte Flussmittel für beste Lötergebnisse eingesetzt werden. Denn diese können nach Bedarf vor einer Verbindung mit einer ebenfalls separat vorgefertigten bei dem vorgeschlagenen Konzept nicht formschlüssigen Adsorberstruktur ausgewaschen werden.

Durch Einsatz investitionsarmer lokaler Erwärmungsverfahren, insbesondere induktiver Verfahren können insbesondere die Rohrböden sequenziell auf Löttemperatur gebracht und die Qualität einer stoffschlüssigen und fluiddichten Lötung durch Schwerkrafteinfluss verbessert und optisch sehr einfach geprüft und ggf. korrigiert werden, noch bevor die Adsorberstruktur appliziert wird.

Der Fügeprozess der beiden vorgefertigten Baugruppen zur thermoaktiven Gesamtstruktur eines erfindungsgemäßen adsorptiven Wärme- und Stoffübertragers gelingt bei vorverzinnten Fügeflächen nahezu ohne weitere Flussmittelverwendung.

Eine weitere charakterisierende Lösungskomponente ist die Ausstattung der Weißblech-Fluidführungskanäle mit einer Innenberippung hoher Rippendichte um 100 Ri/dm aus einem sehr gut thermisch leitenden Kupfer-basierten Werkstoff. Dadurch kann die Zahl der erforderlichen Fluidführungskanäle bei ausreichend großer fluidseitiger Wärmeübertragungsfläche auf einen einzigen, entsprechend breiten Kanal pro Reihe reduziert werden. Die Innenberippung kann dabei die zusätzliche Funktion einer Zugentlastung übernehmen, die bei einer inneren Druckbelastung durch das strömende Wärmeträgerfluid eine Verformung des Fluidführungskanals verhindert.

Die Strömungskanäle der erfindungsgemäßen Gesamtstruktur sind dabei aus Weißblech durch einfache Umformprozesse (Kanten, Biegen, Rollumformen usw.) und Fügen zu geschlossenen Fluidführungskanälen gefertigt. Als Fügeprozesse kommen dabei bevorzugt die in der Metallverpackungsindustrie bekannten Verfahren wie Laserschweißen, HF-schweißen, Falzen oder Bördeln unter optionalem Einsatz von Weichloten aber möglicherweise auch von ausreichend temperaturstabilen Lacken, Klebe- oder Dichtmitteln zum Einsatz. Besonders bevorzugt werden aber zinnbasierte Weichlote eingesetzt, da sie zu festen, fluid- und diffusionsdichten Verbindungen führen. Durch die Kombination von Umform- und Weichlötprozessen werden Form- und Stoffschluss genutzt, um eine ausreichend hohe mechanische Festigkeit und eine hohe Dichtigkeit zu erreichen.

In einer ersten, sehr einfachen Ausführungsform sind die wärmeübertragenden Fluidführungskanäle im Wesentlichen jeweils durch zwei gegeneinander gelötete Z-Bleche gebildet, zwischen die zur Erhöhung des Wärmedurchgangs von einem durchströmenden Fluid an die Kanalwände Kupferrippen eingelegt und mittels Weichlöten mit den Innenseiten der Z-Bleche wärmeleitend verbunden sind. Besonders bevorzugt sind die Rippen trapezartig so geformt, dass sie gleichzeitig als Zuganker zwischen den Flanken der Z-Bleche fungieren und dadurch einen höheren Druck des die plattenförmigen Fluidführungskanäle durchströmenden Fluids ermöglichen. Rippendichte und Rippendicke sind dabei so aufeinander abgestimmt, dass bei den angestrebten Massenstromdichten und zu übertragenden Wärmestromdichten ein guter Kompromiss zwischen Druckverlust und Wärmedurchgangskoeffizient erreicht wird, was zur Basiskompetenz jeden auslegenden Ingenieurs gehört.

In weiterer Verfeinerung der ersten Ausführungsform sind die äußeren Fahnen der Z-Bleche durch Falzen vor dem Lötprozess unter Einbringung zusätzlichen Lotes in Form einer Lotpaste oder Lotfolie umgeschlagen. Der dadurch gebildete berippte Fluidführungskanal kann bei gleichzeitiger flächiger Druckausübung komplett mit den eingebrachten Rippen erhitzt und dadurch stoffschlüssig verlötet werden. Zur Ausbildung einer fluiddichten Fügenaht zwischen den Z-Blechen und der einzulötenden Trapezrippe können auch Flussmittel oder Flussmittel enthaltende Lotpasten zur Erzielung eines guten Lotergebnisses zum Einsatz kommen. Flussmittel-Überschüsse oder Reaktionsprodukte können bedarfsweise vor einem späteren Prozessschritt zur Applizierung der weiter unten beschriebenen Adsorbensblöcke gegebenenfalls wieder entfernt werden.

In einer weiteren Ausführungsform wird der plattenartige innen berippte Fluidführungskanal aus einem einzigen Weißblechband nach dem endlosen Rollumformverfahren hergestellt, das nach einem aus der Rohr- oder Dosenfertigung bekannten Fügeverfahren fluiddicht längs verschossenen wird. Die erforderlichen Trapezrippen können in Form geeignet langer Stücke in einem noch offenen Abschnitt des endlosen Rollumformprozesses eingelegt werden, bevor das umgeformte Profil des Weißblechbandes endgültig verschlossen und abgelängt wird. Das endlose Rollumformverfahren ermöglicht auch die Fertigung von Rohrformen ohne seitlich überstehende Falznähte, indem die Bandkanten nach innen gezogen und die Funktion eines stabileren Zugentlastungssteges übernehmen können.

In einer abgewandelten Ausführungsform kann der Fluidführungskanal auch mittels bekannter Laser- oder Hochfrequenz-Schweißverfahren wie bei dem klassischen Flachrohr-Fertigungsprozess auf Stoß, also I-Naht-verschweißt sein, wie das bei längsgeschweißten zylindrischen Metallverpackungen, z. B. bei Sprühdosen üblich ist. Da die Zinnbeschichtung an der Schweißnaht fehlt, können erforderlichenfalls nachträglich aufgebrachte Beschichtungen den Korrosionsschutz ersetzen oder ergänzen. Durch die I-Naht-Schweißung würde der Materialeinsatz und die verbaute Passivmasse etwas reduziert, erfordert aber einen deutlich größeren Investitionsaufwand durch die erforderliche Hochfrequenz- oder Laserschweißanlage. Endlos nach diesem Verfahren gefertigte Fluidführungskanäle dürften aber bei höheren Stückzahlen wirtschaftlich attraktiv werden.

Vorteilhaft kann die Ausgestaltung der Adsorberstruktur als vorgefertigte Compositstruktur mit Verbindung zur bereits beschriebenen Fluidführungsstruktur ausgeformt sein. Diese Composit-Adsorberstruktur unterscheidet sich von der Adsorberstruktur der oben zitierten Schrift dadurch, dass sie aus einer Mehrzahl vorgefertigter, zusammenhängender selbsttragende Composit-Adsorberblöcke gebildet wird, die ihrerseits aus alternierend geschichteten und miteinander verklebten Rippenblechen und Adsorptionsformkörpern bestehen.

Vorteilhaft kann als Kleber zur Verbindung der Wärmeleitungsbleche mit den Adsorptions-Formkörpern ein thermisch beständiger Silikonkleber verwendet werden. Zur Verklebung wird vorzugsweise ein elastischer Kleber, insbesondere ein temperaturbeständiger Silikonkleber eingesetzt. Alternativ kann die Verbindung auch durch Löten, Schweißen, Vernieten oder andersweitig erfolgen. Die Rippenbleche bestehen aus thermisch gut leitfähigen, rechteckigen dünnen Metallblechen oder Metallfolien. Besonders bevorzugt sind die Rippenbleche aus Kupferband gefertigt, dessen Oberfläche z. B. galvanisch aufgeraut ist, um eine Verklebung zu gewährleisten, die einen geringen thermischen Kontaktwiderstand und eine hohe Scherfestigkeit aufweist.

Die Dicke der Kupferrippen ist so auf die Geometrie, die Sorptionskinetik und die Zykluszeit der Adsorbens-Formkörper abgestimmt, dass ein über die Zykluszeit gemittelter Rippenwirkungsgrad von größer als 0,6 erreicht wird. Die Zykluszeit ist die Zeit, innerhalb derer der im Betrieb erwartete Beladungshub der gesamten Adsorberstruktur in beiden Richtungen durchlaufen wird. Eine derartige Abstimmung ist jedem Fachingenieur möglich, der die kinetischen Eigenschaften des verwendeten Adsorbens-Formkörpers kennt. Typische Foliendicken liegen bei den abgeleiteten typischen Wärmestromdichten durch die Rippen im Bereich zwischen 0,04 bis 0,08 mm.

In einer bevorzugten Ausführungsform kann der Adsorbens-Formkörper des mindestens einen Composit-Adsorberblockes an beiden thermischen Anbindungsflächen eine Rillenstruktur aufweisen, die im Wesentlichen als Transportsystem für den Arbeitsmitteldampf fungiert. Dabei kann ein durch ein Extrusionsverfahren hergestellte Adsorptionsformkörper beidseitig eingebrachte Rillen aufweisen, durch die der Stofftransport des Arbeitsmittels trotz der beidseitig angeklebten Kupferrippen gewährleistet ist. Das Rillensystem begünstigt die Adsorptionskinetik dadurch, dass der Arbeitsmitteldampf mit sehr geringen Strömungsverlusten auf sehr kurzem Weg an die thermischen Anbindungsflächen gebracht wird, in deren Nähe auch die Wärmeleitpfade sehr kurz sind. Nur durch diese neuartige beidseitige thermische Kontaktierung von Formkörpern mit ebenfalls beidseits eingebrachten Rillen wird eine überraschend hohe Adsorptionskinetik erreicht. Dies lässt sich klar dadurch erklären, dass ein Großteil des verbauten Adsorbensmaterials auf sehr kurzem Weg sowohl an die Rippe als Wärmequelle bzw. -senke als auch an die Stoffquelle bzw. -senke in Form des Arbeitsmittelraumes angebunden ist. Durch die beidseitige Anbindung der Adsorbensformkörper kann deren Zahl und damit der Fertigungsaufwand deutlich reduziert werden. Dadurch lassen sich Adsorberblöcke einer einheitlichen Größe und Form bilden, was die automatisierte Fertigung sehr begünstigt.

Vorteilhaft können die Wärmeleitbleche des mindestens einen Composit-Adsorberblockes über die Seitenflächen der Adsorbens-Formkörper hinausragen und in den Längskantenbereichen so profiliert sein, dass sie mindestens eine elastische Anbindungsfläche zum Anlöten an mindestens eine Fläche eines Fluidführungskanals bilden. So können vorteilhaft die Metallbleche an den Längsseiten in Bezug auf die Breite der Adsorbens-Formköpern einen Überstand aufweisen, der so ausgeformt ist, dass die Tangentialflächen an den Blechkanten um ca. 90° umgeformt sind und damit etwa parallel zur Stapelrichtung des verklebten Adsorbens/Rippen-Blockes weisen. Diese überstehenden und umgeformten Kanten dienen als Fügefläche zur späteren Anlötung zwischen je zwei Fluidführungsplatten.

Besonders bevorzugt sind die randumgeformten Flächenbereiche der Rippenbleche wenigstens einseitig verzinnt, um eine qualitativ hochwertige Verlötung mit den im Endzustand angrenzenden Fluidführungskanälen ohne oder mit äußerst geringem Einsatz von Flussmitteln zu ermöglichen.

Bevorzugt sind die überstehenden Blechkanten so ausgeformt, dass deren gemeinsame Tangentialflächen die Anbindungsflächen bilden, die von den durch den Adsorberblock gebildeten Seitenflächen beabstandet sind. Dieser Abstand dient dazu, dass thermomechanische Spannungen durch unterschiedliche Ausdehnungskoeffizienten der Fluidführungskanäle und des alternierend verklebten Adsorberblockes während der thermischen Zyklierung der verlöteten Gesamtstruktur durch die Blechüberstände elastisch aufgenommen werden können. Zur weiteren Erhöhung der Elastizität der Blechanbindungen kann der Blechüberstand mit einer Balg-artigen Welle versehen sein.

Durch den mit den Blechüberständen erzielten Flächenabstand zwischen der Anbindungsfläche und der Grenzfläche des verklebten Adsorberblockes ergeben sich freie Querschnitte, die als Sammelkanäle für den während des Betriebes in den Adsorberblock über dessen Rillenstruktur ein- und ausströmenden Arbeitsmitteldampf genutzt werden. Der Abstand der Flächen liegt bevorzugt im Bereich zwischen 0,5 und 4 mm, besonders bevorzugt zwischen 1,5 und 3 mm.

Weiterhin wird vorgeschlagen, die gesamte an die Fluidführungskanäle thermisch angebundene Adsorberstruktur in Teilblöcke zu unterteilen, die in axialer Richtung der Fluidführungskanäle beabstandet angelötet sind. Dieser Abstand dient dazu, dass die Längsdehnungsdifferenzen sich nicht über die ganze Fluidführungskanallänge aufsummieren und zu Überschreitungen der elastischen Aufnahmefähigkeit der unterschiedlichen Längsdehnungen von metallischem Fluidführungskanal und verklebtem Adsorberblock führen können. Da die Gesamtstruktur während des Anlötprozesses einmalig höheren Temperaturen als beim späteren Betrieb ausgesetzt sind, müssen die Abstände mindestens so groß sein, dass es beim nachfolgenden Abkühlungs- und thermischen Schrumpfungsprozess der Fluidführungskanäle zu keinen Kollisionen zwischen den Teilblöcken kommt.

Die vorgestellte thermoaktive Gesamtstruktur wird zum adsorptiven Wärme- und Stoffübertrager noch dadurch komplettiert, dass dessen Rohrböden mit Deckeln zu Fluidverteil- und Sammelräumen mit Zu- und Abführleitungen verschlossen werden. Auch hier kommen wieder kombinierte Form- und stoffschlüssige, alternativ aber auch kraftschlüssige Verbindungstechniken unter Einsatz von Dichtmitteln zum Einsatz.

Es wird vorgeschlagen, den vorgestellten adsorptiven Wärme- und Stoffübertrager als vorgefertigte Baugruppe so auszubilden, dass er mit einer zweiten, ebenfalls aus Weißblech hergestellten funktionalisierten Gehäusebaugruppe mit integrierter Phasenwechselstruktur zu einem fertigen Sorptionsmodul komplettiert werden kann. Dies gelingt durch eine angepasste Ausführung der mechanischen Schnittstellen.

Eine vorteilhafte Ausführungsform der Erfindung kann durch Zerlegung in leicht wieder lösbare funktionalisierte Baugruppen und Hauptkomponenten wegen des weitgehenden Verzichtes auf einen sonst üblichen Formschluss den immer bedeutender werdenden Vorteil bieten, dass der Fügeprozess zum Zweck des sortenreinen Recyclings der eingesetzten Materialien nach Beendigung der Betriebsphase durch Aufheizung der Fügeschnittstellen über den Lotschmelzpunkt leicht umgekehrt werden kann. Auch die Komponenten des Fluidführungssystems und der gesamten Gehäusekonstruktion können leicht wieder voneinander getrennt und einem separaten Recyclingprozess zugeführt werden.

In einer vorteilhaften Ausführungsform kann das Fluidführungssystem des Wärme- und Stoffübertragers zusammen mit einem Wandelement einen Arbeitsmittelraum bilden, der sich über eine Durchgangsöffnung mit einem Arbeitsmittelraum einer zweiten thermoaktiven Struktur Arbeitsmittel austauschen kann, der ansonsten aber zur Umgebung und zu den Fluidführungssystemen hin fluiddicht ist.

Ausgehend von vorgenannter Ausführungsform kann die zweite thermoaktive Struktur durch eine zweischalige funktionalisierte Gehäusebaugruppe gebildet werden, deren innere Rohrbaugruppe eine Phasenwechselstruktur zum Kondensieren, Speichern und Verdampfen von Arbeitsmittel aufweist.

Weiterhin ausgehend von den beiden vorgenannter Ausführungsformen kann die innere Rohrbaugruppe mit einer äußeren Rohrbaugruppe der Gehäusebaugruppe einen axial durchströmbaren Ringraum bilden, der weitgehend mit einer Rippenstruktur zur Verbesserung des fluidseitigen Wärmedurchgangs ausgefüllt und an die innere Rohrbaugruppe thermisch kontaktiert sein kann.

Vorteilhafterweise kann ein erfindungsgemäßer adsorptiver Wärme- und Stoffübertrager Teil eines Sorptionsmoduls und/oder einer Adsorptions-Wärmepumpe oder -Kälteanlage sein. Insoweit ist auch eine Adsorptions-Wärmepumpe oder -Kälteanlage, die mit einem erfindungsgemäßen Wärme- und Stoffübertrager ausgerüstet ist, Gegenstand der Erfindung.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Figur 1:**: Perspektivischer Ausschnitt der thermoaktiven Struktur 1 einer Ausführungsform eines erfindungsgemäßen adsorptiven Wärme- und Stoffübertragers;
- **Figur 2:**: Perspektivische Explosions-Ansicht der Wiederholteile eines erfindungsgemäßen Composit-Adsorberblockes;
- **Figur 3:**: Prinzipaufbau einer ersten Ausführungsform eines berippten Fluidführungskanals;
- **Figur 4:**: Z-Blech mit endseitigen noppenförmigen Ausprägungen;
- **Figur 5:**: Perspektivische Ansicht eines zweiten Ausführungsbeispiels eines ohne Innenberippung gezeichneten Fluidführungskanals;
- **Figur 6:**: Querschnitt eines HF- oder Laser-geschweißten innenberippten Fluidführungskanals;
- **Figur 7:**: Alternative Ausführungen von Rohrböden für unterschiedliche Fluidführungskanäle;
- **Figur 8:**: Alternative Ausführungsform eines Rohrbodens zur Verwendung mit Gehäuse-abstützenden Fluidführungskanälen;
- **Figur 9:**: Herstellung und Schnitt durch eine fluiddicht gelötete Rohr-Bodenverbindung;
- **Figur 10:**: Schematisierter halber Längsschnitt durch ein erfindungsgemäßes Sorptionsmodul.

In den Figuren sind gleichartige Elemente mit gleichen Bezugszeichen beziffert. Die Figuren zeigen lediglich Beispiele und sind nicht beschränkend zu verstehen.

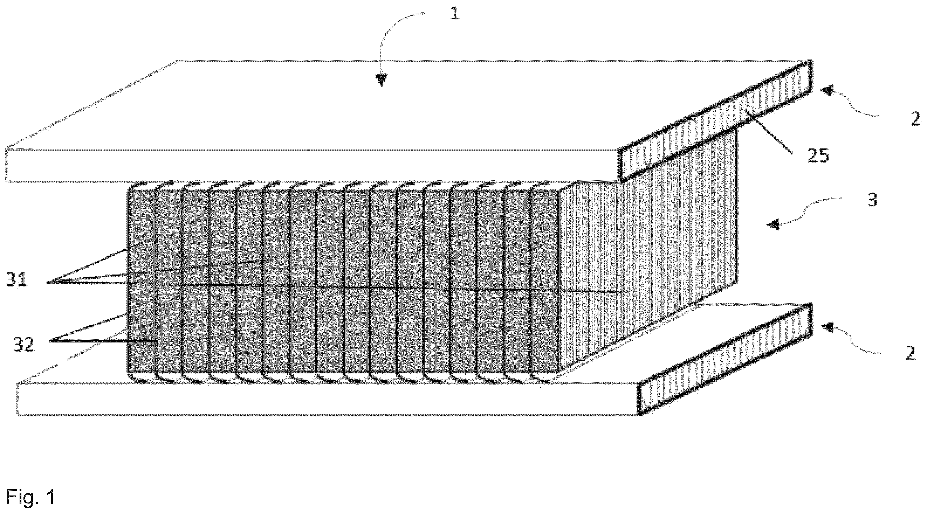

In der Figur 1 ist ein perspektivischer Ausschnitt der thermoaktiven Struktur 1 einer Ausführungsform eines erfindungsgemäßen, äußerst kompakten, adsorptiven Wärme- und Stoffübertragers dargestellt. Ein erstes Hauptmerkmal der Gesamtstruktur sind einfach fertigbare Fluidführungskanäle 2 aus Weißblech. Zur Erzielung eines hohen Wärmedurchgangskoeffizienten sind diese als Fluidführungskanäle ausgeführt und mit inneren Rippenpaketen 25 ausgestattet. Ausführungsvarianten dieser innenberippten Fluidführungskanäle 2 sind weiter unten näher beschrieben. An mindestens einer, bevorzugt aber an beiden Außenwänden der Fluidführungskanäle 2 ist mindestens ein zusammenhängend vorgefertigter Composit-Adsorberblock 3 thermisch leitend angebunden, der aus alternierend miteinander verklebten Adsorptions-Formkörpern 31 und Wärmeleitungsblechen 32 besteht. In einer bevorzugten Ausführungsform sind die Wärmeleitungsbleche 32 aus einem sehr gut wärmeleitenden Kupfer-basierten Werkstoff und die Adsorptions-Formkörper 31 vorzugsweise aus Aktivkohle mit weiteren Hilfsstoffen gefertigt.

Diese Ausführungsform einer erfindungsgemäßen thermoaktiven Grundstruktur besitzt den Vorteil eines sehr hohen Raumnutzungsgrades, bei der jeder Raumanteil eine wichtige Funktion erfüllt. Im Wesentlichen sind das die Raumanteile für die Adsorbensmasse, für die Führung und Wärmeübertragung des Wärmeträgerfluids, für den Wärmetransport zur Adsorbensmasse sowie zur gleichmäßigen Verteilung und druckverlustarmen Zu- und Abführung des Arbeitsmitteldampfes zur gesamten Adsorbensmasse. Dadurch bleibt kein ungenutzter Raumanteil übrig, der sich negativ auf die Leistungsdichte der Gesamtstruktur auswirken würde. Ein weiterer Vorteil der Gesamtstruktur liegt darin, dass diese aus vergleichsweise preiswerten Grundwerkstoffen sehr kosteneffizient mit automatisierbaren Fertigungs- und Fügeverfahren ohne hohe Investkosten hergestellt werden kann.

Vorzugsweise wird zur alternierenden Verklebung von Adsorptions-Formkörper 31 und Wärmeleitungsrippen 32 ein dauerelastischer Silikonkleber mit einer Temperaturbeständigkeit eingesetzt, der eine einmalige kurzzeitige Erwärmung des Composit-Adsorberblockes 3 auf die Schmelztemperatur des eingesetzten Lotes zur stoffschlüssigen Verbindung mit den Fluidführungskanälen erlaubt und der seine Dauerelastizität im Temperaturfenster des späteren zyklischen thermischen Betriebs in ausreichendem Maße beibehält.

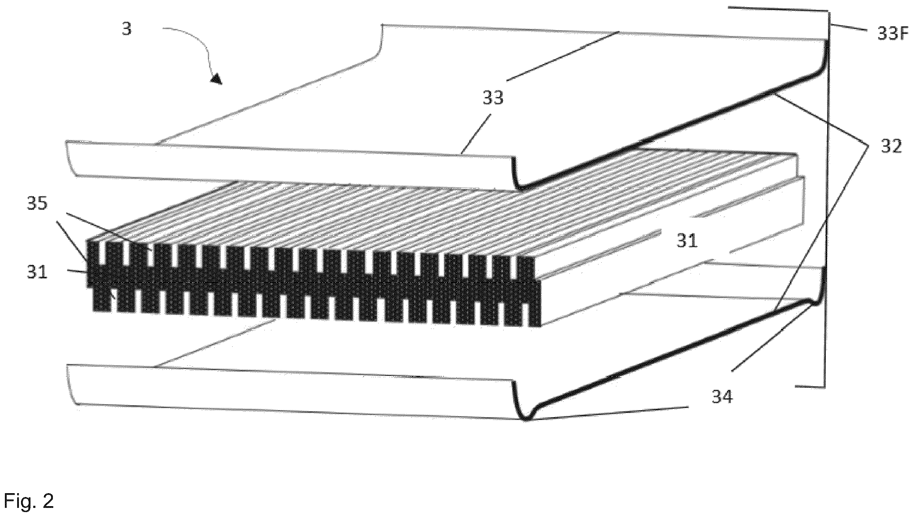

In Figur 2 ist eine Explosionsansicht der einzelnen Wiederholteile eines Composit-Adsorberblockes 3 dargestellt. Die extrudierten Adsorptions-Formkörper 31 sind beidseits mit einem Rillensystem ausgestattet, durch das das Arbeitsmittel die Adsorbens-Massenanteile mit sehr kurzem Wärmetransportweg in der Nähe der oberen und unteren thermischen Kontaktfläche direkt erreichen kann. Dadurch wird eine äußerst schnelle effektive Gesamtkinetik der thermoaktiven Struktur 1 und damit eine entsprechend hohe Leistungsdichte des adsorptiven Wärme- und Stoffübertragers erreicht.

Weiteres kennzeichnendes Merkmal eines vorgefertigten selbsttragenden Composit-Adsorberblockes 3 ist die Ausführung der Wärmeleitungsbleche 32, deren überstehenden Längskanten so umgeformt sind, dass der gesamte vorgefertigte Composit-Adsorberblock 3 zwischen je zwei Fluidführungskanäle geschoben und mit diesen wärmeleitend verbunden werden kann.

Die Wärmeleitungsrippen 32 sind an den Längskanten so umgeformt, dass sich eine kurze federnde Tangentialfläche 33F bildet, die sich bei einem späteren Fügeprozess an die Wand je eines Fluidführungskanals elastisch anlegen kann. Diese Randumformung ermöglicht kleine axiale Relativverschiebungen zwischen Composit-Adsorberblock 3 und der jeweiligen Wand der Fluidführungskanäle aufgrund unterschiedlicher thermischer Ausdehnungskoeffizienten. Beispielsweise kann in einer vorteilhaften Detaillierung des Längskantenbereiches eine S-förmige Welle 34 wie bei einem Dehnungsbalg eingeformt sein, wie dies nur bei dem unteren Wärmeleitungsblech in Fig. 2 dargestellt ist.

Es ist klar, dass sich ein adsorptiver Wärme- und Stoffübertrager aus einer Mehr- oder Vielzahl von Fluidführungskanälen mit mehreren dazwischen wärmeleitend angebundenen einzelnen Composit-Adsorberblöcken 3 zusammensetzen kann.

Weiteres Merkmal ist, dass der gesamte aus den Fluidführungskanälen 2 und den einzelnen Composit-Adsorberblöcken 3 gebildete adsorptive Wärme- und Stoffübertrager sich vorteilhafterweise auch längs der Fluidführungskanäle aus mehreren einzelnen Composit-Adsorberblöcken 3 zusammensetzen kann, die axial voneinander so beabstandet sind, dass die einzelnen Blöcke beim Schrumpfen der Kanallängen durch Abkühlen nach dem Lötprozess nicht miteinander kollidieren. Dies ist besonders dann sinnvoll, wenn bei großen Längen der Fluidführungskanäle und im Betrieb erforderlichen großen Temperaturwechseln zu große Relativverschiebungen zwischen der Composit-Adsorberstruktur 3 und den Fluidführungskanälen 2 aufbauen und zu Ermüdungsbrüchen in den Kantenbereichen der Wärmeleitblechen führen würden.

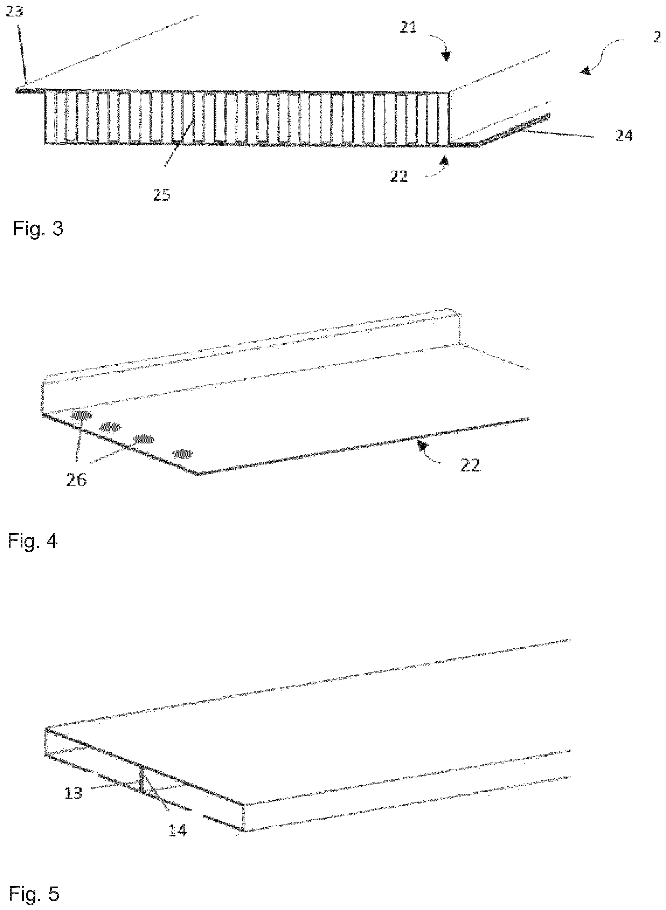

In Figur 3 ist eine erste Ausführungsform eines flachen mit einer Innenberippung versehenen Fluidführungskanals 2 dargestellt. Er besteht aus zwei Z-förmig gekanteten Kanalbegrenzungsblechen 21 und 22 vorzugsweise aus Weißblech, die an ihren fahnenartigen Längskanten 23 und 24 fluiddicht, im vorliegenden Fall durch Weichlöten, miteinander verbunden sind. Die Verbindung kann zusätzlich durch mechanische Umformung, im vorliegenden Fall durch Umfalzen einer der fahnenartigen Längskanten noch mechanisch verstärkt sein. Der zwischen den Blechen 21 und 22 gebildete Strömungsquerschnitt wird durch ein zuvor aus Kupferband gefertigtes Rippenpaket 25 ausgefüllt, das an die beiden Innenflächen der Z-Bleche 21 und 22 angelötet ist. Im gezeigten Ausführungsbeispiel wird das Rippenpaket 25 aus Trapezrippen gebildet. Alternativ können auch Pakete anderer Rippenformen zum Einsatz kommen. Bevorzugt sind allerdings Rippenpakete, deren Rippen weitgehend parallele Flanken aufweisen und die auch Zugkräfte bei einer inneren Druckbelastung des Fluidführungskanals durch das darin axial geführt Wärmetransportmedium aufnehmen können.

Die Rippenpakete dienen einerseits dem Zweck einer Vergrößerung der fluidseitigen Wärmeübertragungsfläche und andererseits einer Stabilisierung des rechteckigen Querschnitts des Fluidströmungskanals auch unter Differenzdruckbelastung von innen nach außen. Die geometrische Parameterabstimmung des Strömungskanals inklusive des Rippenpakets 25 im Zusammenspiel mit den Composit-Adsorberblöcken 3 zur Erzielung einer maximalen Leistungsdichte einerseits und einem noch zu tolerierenden Strömungsdruckverlust durch den Fluidführungskanal andererseits kann als Standardaufgabe eines mittleren Fachingenieurs betrachtet werden. Typische Kanalweiten liegen zwischen 3 mm und 10 mm bei Rippenabständen zwischen 0,5 mm und 2 mm, sie können je nach Gesamtauslegung eines adsorptiven Wärme- und Stoffübertragers bzw. daraus aufgebauten Sorptionsmoduls insbesondere unter Berücksichtigung von Fertigungskosten diese Bereiche aber auch verlassen.

Wie in Figur 4 anhand des unteren Kanalbegrenzungsbleches (Z-Blech) 22 gezeigt, können die Z-Bleche in der Nähe der axialen Endkanten Ausprägungen z. B. in Form von Noppen 26 aufweisen, die als Anschlag bei einem späteren Einschub in einen Rohrboden dienen. Diese mechanischen Anschläge können die Scherbelastung einer weich gelöteten Kanal-/Bodenverbindung verringern und dadurch mechanisch stabilisieren.

Eine weitere Ausführungsform eines Fluidführungskanals ist in Figur 5 dargestellt. Aus Übersichtlichkeitsgründen ist dieser ohne die erforderliche Innenberippung dargestellt. Diese Ausführungsform könnte vorteilhaft nach dem endlosen Rollumformverfahren aus einem Weißblechband bei entsprechend hohen Stückzahlen kostengünstig hergestellt werden. Die beiden Bandkanten 27 und 28 sind dabei nach innen geschlagen und bilden einen Zwischensteg mit doppelter Wandstärke. Zusätzlich erforderliche Rippenpakete könnten entweder während des Umformverfahrens eingelegt oder nachträglich eingeschoben und verlötet werden.

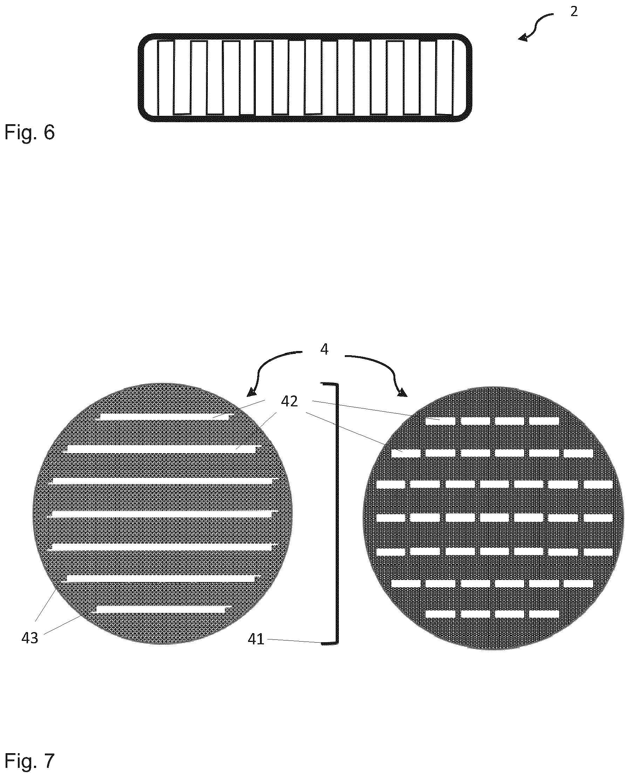

Eine besonders bevorzugte Variante eines Fluidführungskanals 2 ist in Figur 6 dargestellt. Dabei sind die Kanten des nach dem endlosen Rollumformverfahren hergestellten Rohres nach bekannten Verfahren der Technik mittels Hochfrequenz- oder Laserschweißverfahren auf Stoß verschweißt. Auch hier kann eine oberflächenvergrößernde Berippung während des Umformprozesses eingelegt oder nachträglich eingeschoben und innenseitig stoffschlüssig verlötet werden. Diese und von diesem Grundgedanken abgeleitete Fluidführungskanäle haben den Vorteil, dass die Durchzüge eines erforderlichen Rohrbodens einfacher ausgeführt werden können, da sie keine seitlich überstehenden fahnenartigen Längskanten 23, 24 besitzen.

Die verschiedenen Ausführungsformen von Fluidführungskanälen lassen sich in mannigfaltiger Weise zu größeren Rohrbündeln zusammenfassen, die endseitig in gemeinsame auch größere Rohrböden 4 eingeschoben und mit diesem fluiddicht verlötet werden können. Besonders bevorzugt sind runde Rohrböden, die einen zylindrischen Arbeitsraum axial begrenzen. In Figur 7 sind zwei Ausführungsbeispiele für Rohrböden 4 für zylindrische Module dargestellt, die eine Mehrzahl von Fluidführungskanälen 2 unterschiedlicher Ausführungen aufnehmen können. Sie sind vorzugsweise ebenfalls aus Weißblech gefertigt und weisen, wie im Mittelschnitt dargestellt, einen umlaufenden um 90° umgeformten Rand 41 auf, der als Lotfläche für einen zylindrischen Gehäusemantel oder anderes Arbeitsmittelraum-begrenzendes Wandelement dient. Die im Wesentlichen rechteckigen Durchbrüche 42 sind der Kontur der verwendeten Fluidführungskanäle 2 angepasst. Man erkennt in der linken Teilansicht, dass die Ausnehmungen an den Schmalseiten der Durchbrüche 42 schmale Schlitze 43 aufweisen, die es ermöglichen, Fluidführungskanäle entsprechend der ersten Ausführungsform einzuschieben und mit den Rohrböden fluiddicht zu verlöten. Die zweiteilige Wandausführung der Fluidführungskanäle hat den Vorteil, dass sie nach dem Stanz-/Biegeverfahren preiswert auch mit unterschiedlichen Breiten herstellbar sind, um die verfügbare runde Fläche des Rohrbodens 4 maximal auszunutzen. Wie in der rechten Teilansicht dargestellt, kann es vorteilhaft sein, die Fluidführungsstruktur aus einer größeren Zahl schmälerer Fluidführungskanäle identischen Querschnitts zusammen zu setzen.

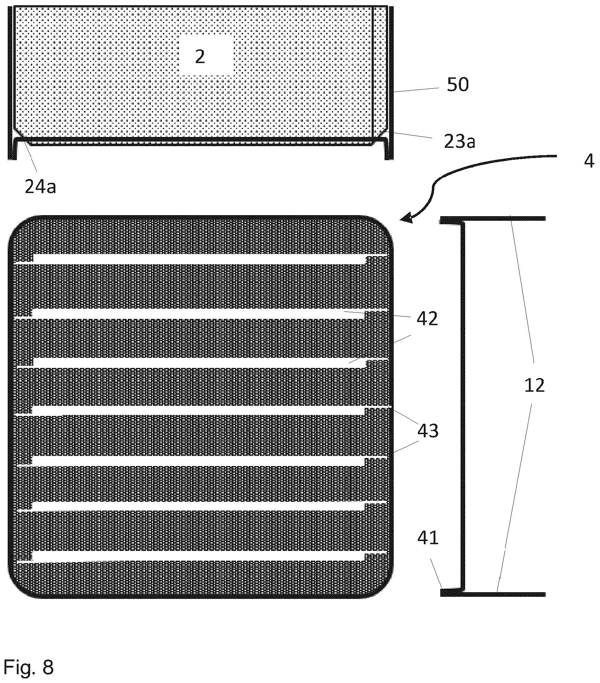

Eine weitere Ausführungsform eines Rohrbodens 4 mit an die Kontur der verwendeten Fluidführungskanäle 2 angepassten Durchbrüchen 42 ist in Figur 8 dargestellt. Sie ist dadurch gekennzeichnet, dass die Rohrböden 4 rechteckig oder quadratisch mit abgerundeten Ecken ausgeformt sind, wobei Fluidführungskanäle einer einheitlichen Größe zum Einsatz kommen, die sich nahezu über die gesamte Breite des Rohrbodens erstrecken. Die seitlich überstehenden fahnenartigen Längskanten 23 und 24 der Fluidführungskanäle 2 erster Ausführungsform enden an der Innenwand eines hier nicht näher dargestellten Arbeitsmittelraum-begrenzenden Wandelementes 12, beispielsweise einem Gehäusemantel und stützen diesen bei einer nach innen gerichteten Druckdifferenz an der linken und rechten Teilfläche des Gehäusemantels ab. Die obere und untere Teilfläche des Gehäusemantels könnte durch andere Maßnahmen oder angrenzende (nicht eingezeichneten) Composit-Adsorberblöcke 3 abgestützt sein. Vorzugsweise sind zur leichteren Einführung der Fluidführungskanäle 2 erster Ausführungsform in die Durchbrüche der Rohrböden 4 die überstehenden fahnenartigen Längskanten 23, 24 an den Ecken 23a, 24a etwas abgeschrägt. Diese Ausführungsform besitzt einen maximalen Bauraum-Nutzungsgrad und empfiehlt sich besonders bei klassischen Anlagenkonzepten mit je einem zentralen Kondensator und Verdampfer, die über Verbindungsleitungen und Rückschlagklappen nach dem Stand der Technik mit mehreren adsorptiven Wärme- und Stoffübertragern verbunden sind.

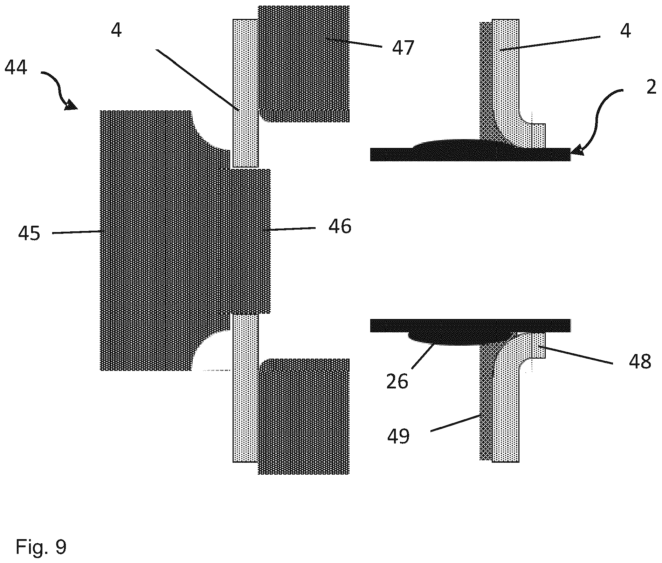

Um eine fluiddichte Rohr-/Bodenverbindung sicher zu stellen, sind die gestanzten oder lasergeschnittenen Durchbrüche 42 so dimensioniert, dass sie beispielsweise nach Figur 9 mit einem Umformwerkzeug 44 mit einem tulpenförmigen Durchzug 48 versehen und auf die passende spaltarme Durchzugsgeometrie gebracht werden können. Die linke Teilansicht zeigt einen stark schematisierten Schnitt durch ein derartiges Werkzeug 44, dessen Stempel 45 einen Zentrierfortsatz 46 aufweist, der in den jeweiligen Durchbruch 42 des Rohrbodens 4 einrastet. Der Stempel 45 wirkt mit einer Matrize 47 zusammen, um den Rand des Durchbruchs tulpenförmig umzuformen, wie dies in der rechten Teilansicht dargestellt ist. Die Auftulpung 48 besitzt den Vorteil, dass die besonders gut mit Lot benetzbare Zinnbeschichtung des Rohrbodens 4 mit der Zinnbeschichtung der Fluidführungskanäle 2 in einen Direktkontakt gebracht und im Rahmen eines Lötverfahrens stoffschlüssig verbunden werden können. Dazu wird vorgeschlagen, den Rohrboden mit einer Lotfolie oder einer Lotpaste 49 mit ausreichender Lotmenge so zu belegen, dass der zwischen Fluidführungskanal und umgeformtem Rohrboden gebildete Spalt mit Lot voll ausgefüllt wird.

Die optionalen Ausprägungen 26 der Kanalbegrenzungsbleche 21 und 22 der Fluidführungskanäle 2 oder Ausprägungen anderer Fluidführungskanäle dienen einer Einschubbegrenzung und einer zusätzlichen formschlüssigen Abstützung zwischen Fluidführungskanal 2 und Rohrboden 4 bei einer Druckbelastung durch ein jenseits des Rohrbodens in einem Fluid-Verteilraum vorliegendes Wärmeübertragu ngsflu id.

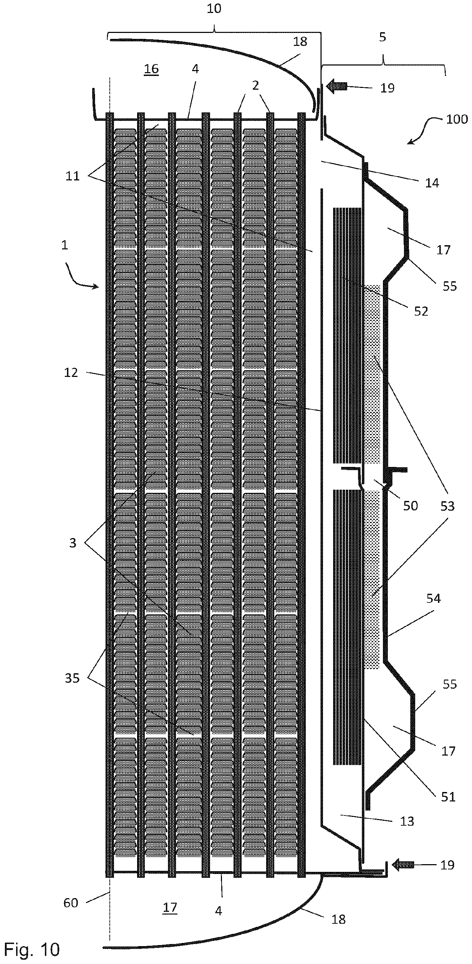

Die Figur 10 zeigt einen schematischen Längsschnitt durch ein Sorptionsmodul 100 unter Verwendung des dargestellten adsorptiven Wärme- und Stoffübertragers als vorgefertigte Baugruppe 10 und einer vorgefertigten funktionalisierten Gehäusebaugruppe 5. Die funktionalisierte Gehäusebaugruppe 5 ist ihrerseits aus einer inneren Rohrbaugruppe 51 mit einer integrierten Phasenwechselstruktur 52 zur Kondensation, Speicherung und Wiederverdampfung eines Arbeitsmittels und einer äußeren Rohrbaugruppe 54 zusammengesetzt. Beide Rohrbaugruppen 51 und 54 sind zylinderförmig ausgeführt und in Bezug auf eine Mittelache 60 konzentrisch zur Umgebung hin und mit der Baugruppe 10 des adsorptiven Wärme- und Stoffübertragers fluiddicht miteinander verbunden.

Die Baugruppe 10 umschließt einen Arbeitsmittelraum 11 mittels eines Arbeitsmittelraum-begrenzenden Wandelementes 12, das nur eine Durchgangsöffnung 14 zum radial nach außen führenden zweiten Arbeitsmittelraum 13 der funktionalisierten Gehäusebaugruppe 5 aufweist, durch die Arbeitsmitteldampf im Betrieb zwischen den beiden Arbeitsmittelräumen hin- und herströmen kann. Die beiden Baugruppen 10 und 5 besitzen jeweils eigene Fluid-Verteil- und Sammelräume 16 und 17, durch die jeweils eigene Wärmeübertragungsfluide fluiddicht voneinander und zur Umgebung hin getrennt durch Fluidführungskanäle 2 und einen fluiddurchströmbaren Ringraum 50 geführt werden können.

Die Baugruppe 10 des vorliegend vorgeschlagene adsorptive Wärme- und Stoffübertragers besteht aus einer oben beschriebenen thermoaktiven Struktur 1, einem Arbeitsraum 11, der von zwei Rohrböden 4 und einem Arbeitsmittelraum-begrenzenden Wandelement 12 mit Ausnahme der beschriebenen Durchgangsöffnung 14 eingeschlossen ist. Optional kann diese Öffnung zur Speicherung von Wärme oder Kälte nach dem Stand der Technik zum Zwecke einer Wärme- und/oder Kältespeicherung auch verschließbar ausgeführt sein oder zur Anwendung in einer Anlage mit zentralem Kondensator und Verdampfer mit Rückschlagklappen ausgestattet sein. Die Fluidführungskanäle 2 durchsetzen die beiden Rohrböden 4 fluiddicht und sind damit auch Teil der Arbeitsmittel-Raumbegrenzung.

Gleichzeitig sind die Rohrböden 4 auch Begrenzungsflächen je eines Fluidverteil- bzw. -sammelraumes 16 und 17, die mit Verteilraumdeckeln 18 zur Umgebung hin fluiddicht verschlossen sind und ein Wärmeübertragungsfluid gleichmäßig auf die einzelnen Fluidführungskanäle 2 verteilen. Zur Erhöhung der Druckfestigkeit der Fluidverteil- und -sammelräume können die Rohrböden 4 mit den Verteilkastendeckeln 18 auch mit einem Formschluss durch Materialumformung versehen werden, wie das die beiden Pfeile beispielhaft andeuten sollen. Die Verteilräume 16 und 17 besitzen hier nicht dargestellte Stutzen zur Zu- bzw. Abführung des Wärmeträgerfluids.

Zwischen den Fluidführungskanälen 2 sind vorgefertigte Composit-Adsorberblöcke 3 wärmeleitend mit den Fluidführungskanälen 2 verbunden. Die Blöcke sind in axialer Rohrrichtung mit je einem Spalt 35 so voneinander beabstandet, dass die einzelnen Teilblöcke beim thermischen Schrumpfen der Fluidführungskanäle beispielsweise beim Abkühlen nach einem Lötprozess gerade nicht miteinander kollidieren.

Die funktionalisierte Gehäusebaugruppe 5 ist ihrerseits aus einer inneren Rohrbaugruppe 51 und einer äußeren Rohrbaugruppe 54 optional aus Ringelementen aufgebaut und koaxial und fluiddicht z. B. durch Löten miteinander verbunden.

Die innere Rohrbaugruppe 51 weist eine innenseitig angelötete Phasenwechselstruktur 52 zur Kondensation, Speicherung und Wiederverdampfung von Arbeitsmittel vorzugsweise Methanol auf. Die Phasenwechselstruktur ist vorteilhafterweise aus einer Kupfer-Wellrippenstruktur nach bekanntem Stand der Technik gefertigt.

Außenseitig weist die innere Rohrbaugruppe 51 eine weitere durch Löten angebundene Rippenstruktur 53 auf, die einen zusammen mit einer äußeren Rohrbaugruppe 54 gebildeten axial fluiddurchströmbaren Ringraum 50 zu einem Großteil ausfüllt. Durch die Berippung des Ringraumes wird ein sehr guter Wärmedurchgangskoeffizient von einem Wärmeträger-Fluid durch die innere Gehäusebaugruppe 51 zur innen anliegenden Phasenwechselstruktur 52 erreicht.

Die äußere Rohrbaugruppe 54, die analog zur inneren Rohrbaugruppe 51 aus mehreren axialen Rohrsegmenten aufgebaut sein kann, weist an den axialen Endbereichen umlaufende Ringsicken 55 auf, um ein über nicht dargestellte radiale Rohrstutzen zu- und ablaufendes Wärmeträgerfluid in Umfangsrichtung gleichmäßig zu verteilen.

Das fertige Sorptionsmodul 100 wird dadurch gebildet, dass die beiden vorgefertigten Baugruppen 10 und 5 koaxial übereinander geschoben und per Stoffschluss, insbesondere durch Löten fluiddicht miteinander verbunden werden. Zur Steigerung der mechanischen Belastbarkeit können zusätzliche Formschlussmaßnahmen zum Beispiel durch Randumformung eingesetzt werden.

### Bezugszeichenliste

- 1: Thermoaktive Struktur eines adsorptiven Wärme- und Stoffübertragers
- 10: Adsorptiver Wärme- und Stoffübertrager als vorgefertigte Baugruppe
- 11: Arbeitsmittelraum des adsorptiven Wärme- und Stoffübertragers
- 12: Arbeitsmittelraum-begrenzendes Wandelement
- 13: Arbeitsmittelraum der funktionalisierten Gehäusebaugruppe
- 14: Durchgangsöffnung für Arbeitsmitteldampf
- 16: Fluidverteil- und Sammelräume der Baugruppe 10
- 17: Fluidverteil- und -Sammelräume der Baugruppe 5
- 18: Verteilraumdeckel des adsorptiven Wärme- und Stoffübertragers 10
- 2: Fluidführungskanäle
- 21: erstes Z-förmig gekantetes Kanalbegrenzungsblech eines Fluidführungskanals
- 22: zweites Z-förmig gekantetes Kanalbegrenzungsblech eines Fluidführungskanals
- 23: erste seitliche fahnenartige Längskante eines Z-förmigen Kanalbegrenzungsbleches
- 23a: Einführschräge der ersten seitlichen fahnenartigen Längskante
- 24: zweite seitliche fahnenartige Längskante eines Z-förmigen Kanalbegrenzungsbleches
- 24a: Einführschräge der zweiten seitlichen fahnenartigen Längskante
- 25: Inneres Rippenpaket eines Fluidführungskanals
- 26: Endseitige noppenförmige Ausprägungen eines Kanalbegrenzungsbleches 21 oder 22
- 27: Erste, nach innen geschlagene Bandkante eines alternativen Fluidführungskanals
- 28: Zweite nach innen geschlagene Bandkante eines alternativen Fluidführungskanals
- 3: Composit-Adsorberblock
- 31: Adsorbens-Formkörper mit beidseitigem Rillensystem
- 32: Wärmeleitungsbleche
- 33: Längskantenbereich der Wärmeleitungsrippen
- 33F: Tangentiale Anbindungsfläche der Wärmeleitungsrippen 32
- 34: Ausformung des Rippenüberstandes als S-förmige Welle
- 35: Axialer Abstandsspalt zwischen je zwei Composit-Adsorberblöcken 3
- 4: Rohrboden zur fluiddichten Aufnahme von Fluidführungskanälen
- 41: Umgeformter Rand eines Rohrbodens
- 42: Durchbrüche zur Aufnahme von Fluidführungskanälen 2
- 43: Schlitzförmige Erweiterungen zur Aufnahme von Fluidführungskanälen erster Ausführungsform
- 44: Umformwerkzeug zur Fertigung von aufgetulpten Durchzügen von Fluidführungskanälen
- 45: Stempel des Umformwerkzeugs 44
- 46: Zentrierfortsatz des Stempels 45
- 47: Matrize des Umformwerkzeugs 44
- 48: Auftulpung des Rohrdurchzug
- 5: Funktionalisierte Gehäusebaugruppe
- 50: Fluiddurchströmbarer Ringraum der funktionalisierten Gehäusebaugruppe
- 51: Innere Rohrbaugruppe einer funktionalisierten Gehäusebaugruppe
- 52: Phasenwechselstruktur
- 53: Rippenstruktur zur Berippung des fluiddurchströmbaren Ringraumes 50
- 54: Äußere Rohrbaugruppe
- 55: Ringsicken der äußeren Rohrbaugruppe 54
- 60: Mittelachse des Sorptionsmoduls 100
- 100: Sorptionsmodul

## Patentansprüche

1. Adsorptiver Wärme- und Stoffübertrager (10), **dadurch gekennzeichnet, dass** dessen thermoaktive Struktur (1) aus mindestens einem, insbesondere aus einer Mehrzahl vorgefertigter Composit-Adsorberblöcke (3), umfassend jeweils mindestens einen alternierend mit Wärmeleitblechen (32) verklebten Adsorbens-Formkörper (31), besteht, die in ein vorgefertigtes und fluiddicht gefügtes Fluidführungssystem aus Fluidführungskanälen (2) und Rohrböden (4), bevorzugt ohne Formschluss, eingebracht und mit gutem Wärmekontakt, bevorzugt mittels Löten, verbunden sind.

2. Adsorptiver Wärme- und Stoffübertrager nach Anspruch 1, **dadurch gekennzeichnet, dass** das Fluidführungssystem aus mindestens zwei parallel ausgerichteten Fluidführungskanälen besteht, die jeweils mit mindestens einem oberflächenvergrößernden inneren Rippenpaket (25) ausgestattet sind.

3. Adsorptiver Wärme- und Stoffübertrager nach Anspruch 2, **dadurch gekennzeichnet, dass** dessen Fluidführungskanäle (2) aus zinnbeschichtetem Stahlblech, bevorzugt Weißblech, gefertigt sind und endseitig in je einen ebenfalls aus Weißblech gefertigten Rohrboden (4) münden und mit diesem fluiddicht verlötet sind.

4. Adsorptiver Wärme- und Stoffübertrager nach mindestens einem der vorigen Ansprüche, **dadurch gekennzeichnet, dass** die Adsorbens-Formkörper (31) des mindestens einen Composit-Adsorberblockes (3) an beiden thermischen Anbindungsflächen eine Rillenstruktur aufweisen, die im Wesentlichen als Transportsystem für den Arbeitsmitteldampf fungiert.

5. Adsorptiver Wärme- und Stoffübertrager nach mindestens einem der vorigen Ansprüche, **dadurch gekennzeichnet, dass** die Wärmeleitbleche (32) des mindestens einen Composit-Adsorberblockes (3) über die Seitenflächen der Adsorbens-Formkörper (31) hinausragen und in den Längskantenbereichen (33) und so profiliert sind, dass sie mindestens eine elastische Anbindungsfläche (33F) zum Anlöten an mindestens eine Fläche eines Fluidführungskanals bilden.

6. Adsorptiver Wärme- und Stoffübertrager nach mindestens einem der vorigen Ansprüche, **dadurch gekennzeichnet, dass** als Kleber zur Verbindung der Wärmeleitungsbleche (32) mit den Adsorptions-Formkörpern (31) ein thermisch beständiger Silikonkleber verwendet wird.

7. Adsorptiver Wärme- und Stoffübertrager nach mindestens einem der vorigen Ansprüche, **dadurch gekennzeichnet, dass** das Fluidführungssystem des Wärme- und Stoffübertragers zusammen mit einem Wandelement (12) einen Arbeitsmittelraum bildet, der sich über eine Durchgangsöffnung (14) mit einem Arbeitsmittelraum einer zweiten thermoaktiven Struktur Arbeitsmittel austauschen kann, der ansonsten aber zur Umgebung und zu den Fluidführungssystemen hin fluiddicht ist.

8. Adsorptiver Wärme- und Stoffübertrager nach Anspruch 7, **dadurch gekennzeichnet, dass** die zweite thermoaktive Struktur durch eine zweischalige, funktionalisierte Gehäusebaugruppe (5) gebildet wird, deren innere Rohrbaugruppe (51) eine Phasenwechselstruktur (52) zum Kondensieren, Speichern und Verdampfen von Arbeitsmittel aufweist.

9. Adsorptiver Wärme- und Stoffübertrager nach Anspruch 8, **dadurch gekennzeichnet, dass** die innere Rohrbaugruppe (51) mit einer äußeren Rohrbaugruppe (54) der Gehäusebaugruppe einen axial durchströmbaren Ringraum (50) bildet, der weitgehend mit einer Rippenstruktur zur Verbesserung des fluidseitigen Wärmedurchgangs ausgefüllt und an die innere Rohrbaugruppe thermisch kontaktiert ist.

10. Adsorptiver Wärme- und Stoffübertrager nach mindestens einem der vorigen Ansprüche, **dadurch gekennzeichnet, dass** dieser Teil eines Sorptionsmoduls (100) und/oder einer Adsorptions-Wärmepumpe oder - Kälteanlage ist.

11. Sorptionsmoduls (100) und/oder Adsorptions-Wärmepumpe oder - Kälteanlage, **dadurch gekennzeichnet, dass** ein adsorptiver Wärme- und Stoffübertrager nach einem der vorgenannten Ansprüche umfasst ist.
